# EUROPÄISCHE PATENTSCHRIFT

(11) **EP 0 647 263 B1**
(45) Veröffentlichungstag und Bekanntmachung des Hinweises auf die Patenterteilung: **15.05.1996**
(21) Anmeldenummer: 93912980.5
(22) Anmeldetag: 15.06.1993
(51) Int. Cl.: C11D 7/08, C11D 7/34, A01N 41/04

(54) **VERWENDUNG VON ISETHIONSÄURE IN REINIGUNGS- UND DESINFEKTIONSMITTELN**
USE OF ISETHIONIC ACID IN CLEANING AND DISINFECTING AGENTS
UTILISATION D'ACIDE ISETHIONIQUE DANS LES NETTOYANTS ET LES DESINFECTANTS

(30) Priorität: 24.06.1992 DE 4220581
(43) Veröffentlichungstag der Anmeldung: 12.04.1995
(73) Patentinhaber: Henkel Kommanditgesellschaft auf Aktien, D-40191 Düsseldorf (DE)
(72) Erfinder: BUNTE, Reinhard, D-41542 Dormagen (DE); BRAGULLA, Siegfried, D-40789 Monheim (DE); GROSSE BÖWING, Walter, D-41541 Dormagen (DE); SCHNEIDER, Markus, D-47051 Duisburg (DE)
(86) Internationale Anmeldenummer: EP9301513
(87) Internationale Veröffentlichungsnummer: WO9400550

(56) Entgegenhaltungen:
- EP-A- 0 175 664
- EP-A- 0 208 403
- EP-A- 0 271 791
- US-A- 4 647 458

## Beschreibung

Die vorliegende Erfindung betrifft die Verwendung von Isethionsäure (2-Hydroxyethansulfonsäure) als Säuregrundlage von Reinigungsund/oder Desinfektionsmitteln, insbesondere in der lebensmittelverarbeitenden Industrie.

In der Reinigungs- und Desinfektionstechnik werden zur Zeit überall dort, wo saure Mittel angezeigt sind, Produkte verwendet, die auf Basis Salpetersäure, Schwefelsäure und Phosphorsäure aufgebaut sind. Für spezielle Aufgaben werden auch Mischungen dieser Säuren eingesetzt. Salzsäure und Flußsäure werden nur in einzelnen Fällen verwendet, und zwar überall dort, wo das zu reinigende Material nicht durch Korrosionen gefährdet ist.

Für die Reinigungs- und Desinfektions-Technologie im Rahmen der lebensmittelverarbeitenden Industrie sind im wesentlichen nur die erstgenannten drei Mineralsäuren in Gebrauch. Insbesondere die Phosphorsäure zeigt neben ihrer Funktion als Säure auch reinigungsaktive Effekte. Sie wird deshalb im überwiegenden Maße für die Reinigungs- und Desinfektions-Technik angewandt.

Die Aufzählung der sauren Stoffe muß ergänzt werden durch eine Reihe organischer Säuren, insbesondere Amidosulfonsäure, Ameisensäure, zum Teil Essigsäure sowie Zitronensäure. Aufgrund ihrer schwächeren Acidität sind sie jedoch nicht umfassend verwendbar.

Selbstverständlich werden auch die entsprechenden sauren Salze der aufgeführten anorganischen und organischen Säuren verwendet. Phosphorsäure und ihre sauren Salze werden im überwiegenden Maße als Grundlage für saure Reinigungs- und/oder Desinfektionsmittel heute noch verwendet. Die Phosphorsäure bzw. ihre sauren Salze werden kombiniert mit oberflächenaktiven Stoffen, Antischaummitteln, Korrosionsinhibitoren und gegebenenfalls Lösungsvermittlern, ferner speziellen Desinfektionskomponenten, die im Phosphorsäuremilieu stabil und wirksam sind - z.B. quartäre Ammoniumverbindungen, elementares Jod, Wasserstoffperoxid und Perverbindungen.

Diese Kombinationen werden im Temperaturbereich zwischen 5 und 85°C zur Entfernung von Eiweiß, Fett und mineralischen Verschmutzungen eingesetzt, wie sie in den entsprechenden Branchen der lebensmittelverarbeitenden Industrie anfallen. Liegen nur mineralische Verschmutzungen vor, so sind dafür auch Produkte auf Schwefel- und Salpetersäurebasis auf dem Markt. Auch diese können kombiniert werden mit speziellen Desinfektionskomponenten, die in diesem Milieu stabil und wirksam sind.

Durch die in den letzten Jahren immer stärker gewordene Notwendigkeit, nitrat- und allgemein stickstoffhaltige Produkte sowie vor allem Produkte auf Phosphorsäurebasis aus umwelttechnischen Gründen durch andere Säuregrundlagen zu ersetzen, hat eine Reihe von grundlegenden Untersuchungen gezeigt, daß als Ersatz für Salpetersäure, aber vor allem für Phosphorsäure, nur begrenzte Möglichkeiten bestehen. Zur Entfernung von Verschmutzungen, wie beispielsweise Kohlenhydrate, Eiweiß, Fette, anorganische Mineralbestandteile und sonstige Reste, kann beispielsweise Schwefelsäure, die als Substitut in Frage kommen könnte, wegen ihres unzureichenden Reinigungseffekts bei organischen Verschmutzungen nicht verwendet werden. Auch ist an Chromnickelstählen und Aluminiumoberflächen vor allem im höheren Temperaturbereich bei 85°C mit starken Korrosionen zu rechnen.

Eine brauchbare Lösung ist die Amidosulfonsäure, die einen guten Reinigungseffekt bei organischen Verschmutzungen besitzt und korrosionstechnisch für Chromnickelstahl und Aluminium akzeptabel ist.

Bei sogenannten Standbädern, d.h. Reinigungsbädern, die zur wiederholten Durchführung des Reinigungs- und/ oder Desinfektionsprozesses im überwiegenden Maße eingesetzt werden, kommt es jedoch zur Zersetzung dieser Verbindung. Der Reinigungseffekt wird dann unzureichend und zusätzlich tritt Korrosion auf. Die im Stand der Technik bekannten organischen Säuren sind in den meisten Fällen, insbesondere bei anorganischen Verschmutzungen, unwirksam (kurzkettige Carbonsäuren bzw. Dicarbonsäuren) oder weisen einen zu starken, beim Reinigungsprozeß störenden Geruch auf (Ameisensäure).

In der DE-A-36 42 604 wird die Verwendung von kurzkettigen, 1 bis 4 C-Atome enthaltenden Alkansulfonsäuren oder deren Gemische in Reinigungs- und Desinfektionsmitteln als alleinige Säuregrundlage gegebenenfalls zusammen mit weiteren anorganischen oder organischen Säuren, insbesondere in der lebensmittelverarbeitenden Industrie, beschrieben.

Ullmanns Encyklopädie der technischen Chemie, 4. Auflage, Band 20, Seite 153 ff, beschreibt Reinigungs- und Desinfektionsmittel für die Lebensmittelindustrie und führt die gängigen Bestandteile derartiger Mittel auf.

Die EP-A-0 175 664 betrifft pulverförmige oder wäßrige Mittel zur Inhibierung des durch Mikroorganismen verursachten anaeroben Abbaus organischer Substanzen. Derartige Mittel enthalten als hauptsächliche Wirksubstanz Salze der Hydroxymethan-sulfonsäure, insbesondere das Natriumsalz. Die Salze dieser Säure weisen einerseits eine starke bakterizide oder bakteriostatische Wirkung auf und reagieren andererseits mit den beim anaeroben Abbau gebildeten toxischen Gasen unter Bildung nicht-flüchtiger, geruchsfreier Substanzen.

Der vorliegenden Erfindung liegt nun die Aufgabe zugrunde, verbesserte Reinigungs- und/oder Desinfektionsmittel zur Verfügung zu stellen, die möglichst stickstoff- und phosphorarm bzw. stickstoffund phosphorfrei sein sollen, um den Umweltanforderungen zu genügen und die insbesondere für die Entfernung von Verschmutzungen wie beispielsweise Kohlenhydrate, Eiweiß, Fette, anorganische Mineralbestandteile und sonstige Reste in der lebensmittelverarbeitenden Industrie geeignet sind. Gleichzeitig sollen sie bis in einen hohen Temperaturbereich von etwa 85°C zu keinen Korrosionserscheinungen an Chromnickelstählen, Aluminium und Kupferoberflächen führen.

Demgemäß wurde überraschenderweise gefunden, daß die Verwendung von Isethionsäure als Säuregrundlage von sauren Reinigungs- und/oder Desinfektionsmitteln Vorteile bei der Entfernung der oben genannten Verschmutzungen aufweist.

Es wurde gefunden, daß Isethionsäure neben einer guten Wirkung gegenüber organischen Verschmutzungen aufgrund der starken Acidität auch in der Lage ist, mineralische Verschmutzungen gut zu entfernen. Zudem konnte festgestellt werden, daß es im Gegensatz zu der Verwendung von Schwefelsäure bei Chromnickelstählen selbst bis in den hohen Temperaturbereich, wie er in der Reinigungsmitteltechnologie vorkommt, zu keinen Korrosionserscheinungen kommt.

Wäßrige Lösungen organischer Säuren wie Ameisensäure, Essigsäure und/oder Zitronensäure haben zu geringe Leitwerte in der Anwendungslösung um die Dosierung der Lösung mittels Leitfähigkeitsmeßund Steuergeräten automatisch in der Konzentration zu regeln.

Die Verwendung von Isethionsäure führt demgegenüber zu ausreichend hohen Leitwerten der Anwendungslösung um diese mittels automatischer Steuerung kontrollieren zu können.

Isethionsäure wird erfindungsgemäß in Konzentrationen von 0,5 bis 100 Gew.-%, vorzugsweise im Bereich von 5 bis 95 Gew.-%, jeweils bezogen auf die gesamte Formulierung, in den erfindungsgemäßen Reinigungs- und Desinfektionsmitteln verwendet.

In den Rahmen der vorliegenden Erfindung fallen demgemäß auch Isethionsäure enthaltende Reinigungs- und Desinfektionsmittel, die Stickstoff-frei (Nitrat) und Phosphor-frei (Phosphat) sind und die zudem gegenüber Chromnickelstahl nicht korrosiv sind. In dem Falle, daß der Phosphorgehalt nur eine nebengeordnete Rolle spielt, können die sauren Reinigungs- und Desinfektionsmittel neben der Isethionsäure auch Phosphorsäure bzw. Schwefelsäure und gegebenenfalls organische Säuren, beispielsweise kurzkettige Alkansulfonsäuren mit 1 bis 4 C-Atomen, als gemischte Säuregrundlage enthalten. In diesem Falle können bevorzugterweise 30 bis 40 Gew.-% Schwefelsäure und/oder 20 bis 30 Gew.-% Phosphorsäure, jeweils bezogen auf die gesamte Formulierung, neben der Isethionsäure enthalten sein.

Neben den oben aufgeführten Säuren können die Isethionsäure aufweisenden Reinigungsmittel gegebenenfalls weitere schmutzaufschließende Komponenten, Komplexierungsmittel, oberflächenaktive Substanzen, Korrosionsschutzmittel, Antischaummittel und Duftstoffe enthalten, wie sie beispielsweise in Ullmanns Encyklopädie der technischen Chemie, 4. Auflage, Band 20, Seite 153 f, beschrieben sind.

Desinfektionsmittel im Sinne der vorliegenden Erfindung können beispielsweise Peroxyverbindungen, Jodophore, quartäre Ammoniumverbindungen, Ampholyte und Aldehyde sein, wie sie beispielsweise in Ullmanns loc. cit., Seite 155, beschrieben sind.

Im Sinne der vorliegenden Erfindung werden die vorstehend definierten Isethionsäure-haltigen, sauren Reinigungs- und/oder Desinfektionsmittel in der lebensmittel verarbeitenden Industrie, vorzugsweise zur Entfernung von Kohlenhydraten, Eiweiß, Fetten, anorganischen Mineralbestandteilen und sonstigen Resten, insbesondere von harten Oberflächen, verwendet.

### Korrosionsverhalten der Isethionsäure

Es wurden 0,5 Gew.-%ige Lösungen von Isethionsäure, Methansulfonsäure sowie Schwefelsäure in Wasser von 0 °d hergestellt und bei 75°C einem Korrosionstest gegenüber Chromnickelstahlplättchen (4401; 10 x 5 cm) nach DIN 50905 unterzogen. Nach einer Einwirkungszeit von 24 Stunden auf die Chromnickelstahlplättchen ergab sich ein Gewichtsabtrag von:
- Methansulfonsäure: 0,13 g/m (0,0054 g/m·h)
- Schwefelsäure: 9,53 g/m (0,40 g/m·h)
- Isethionsäure: 0,01 g/m (0,0005 g/m·h)

Der Korrosionstest zeigt deutlich, daß unter den obigen Bedingungen Chromnickelstahl von Schwefelsäure stark und von Methansulfonsäure etwas angegriffen wird. Nach den Beständigkeitstabellen werden die Abträge der Isethionsäure auch gegenüber Methansulfonsäure als vollkommen beständig angesehen. Die Abtragswerte der Schwefelsäure liegen bereits in einem Abtragbereich, der nicht mehr hingenommen werden kann, da die Aufrauhung der Oberfläche zu groß ist und die Reinigung erschwert wird. Zudem besteht die Gefahr von Pittings-Bildung, wenn die äußeren Einsatzbedingungen, wie beispielsweise ein hoher Chloridgehalt des Wassers, gegeben sind. Ferner liegt der Abtrag erheblich höher und erreicht den Bereich "weniger beständig" oder "nicht beständig", wenn die Temperatur der Reinigungs- und/ oder Desinfektionslösungen mehr als 75 °C beträgt, wie beispielsweise bei Ultra-Hochtemperaturverfahren bis 140 °C.

### Schaumverhalten

In einer Schaumschlagapparatur nach Götte (DIN 53 902, Teil 1) wurde Isethionsäure in 0,5 Gew.-%iger wäßriger Lösung von 0 °d bei 40°C auf ihr Schaumverhalten überprüft. Die Lösung bildete keinen Schaum.

### Beispiel 1

100 cm³-Glasflaschen wurden bis etwa zur Hälfte in Kondensmilch eingetaucht, die Milch abtropfen gelassen und anschließend 24 Stunden zur Antrocknung in einem Exsiccator bei 20 °C über Natriumsulfat belassen. Diese so präparierten Flaschen wurden mittels einer Tauchapparatur in die zu prüfende Lösung eingetaucht. Dieser Tauchvorgang wurde zweimal wiederholt und die Reinigungswirkung entsprechend einer Skala von sehr gut (1) bis ungenügend (6) beurteilt.

Die Temperatur der Reinigungslösung betrug 40 °C. Es wurde eine 0,2 Gew.-%ige wäßrige Lösung von Isethionsäure in deionisiertem Wasser hergestellt. Die Reinigungswirkung wurde mit 3 bis 4, d.h. "befriedigend" bis "ausreichend" beurteilt. Die visuelle Beurteilung nach dem Tauchen ergab die Note "befriedigend". Das Dispersionsverhalten wurde mit "gut" beurteilt.

### Vergleichsbeispiel 1

100 cm³-Glasflaschen, die gemäß Beispiel 1 präpariert worden waren, wurden gemäß Beispiel 1 in eine wäßrige, 0 °d, Methansulfonsäure einer Konzentration von 0,2 Gew.-% getaucht. Diese Lösung zeigte die gleichen Reinigungsergebnisse wie in Beispiel 1.

### Vergleichsbeispiel 2

100 cm³-Glasflaschen, die gemäß Beispiel 1 präpariert worden waren, wurden gemäß Beispiel 1 in eine wäßrige, 0 °d, Phosphorsäure einer Konzentration von 0,2 Gew.-% getaucht. Die Reinigungswirkung wurde mit "gut" beurteilt. Nach dem Tauchen ergab die visuelle Bemusterung die Note "gut". Das Dispersionsverhalten wurde ebenfalls mit "gut" beurteilt.

### Vergleichsbeispiel 3

100 cm³-Glasflaschen, die gemäß Beispiel 1 präpariert worden waren, wurden gemäß Beispiel 1 in 0,5 Gew.-%ige wäßrige, 0 °d, Schwefelsäure getaucht. Diese Lösung zeigte überhaupt keinen Reinigungseffekt.

### Beispiel 2

100 cm³-Glasflaschen, die gemäß Beispiel 1 präpariert worden waren, wurden gemäß Beispiel 1 in eine wäßrige, 0 °d, Isethionsäure einer Konzentration von 0,5 Gew.-% getaucht. Die Reinigungswirkung wurde mit "befriedigend" beurteilt. Nach dem Tauchen ergab die visuelle Bemusterung die Note "befriedigend". Das Dispersionsverhalten wurde mit "gut" beurteilt.

### Vergleichsbeispiel 4

100 cm³-Glasflaschen, die gemäß Beispiel 1 präpariert worden waren, wurden gemäß Beispiel 1 in eine wäßrige, 0 °d, Methansulfonsäure in einer Konzentration von 0,5 Gew.-% getaucht. Die Reinigungswirkung wurde mit "ausreichend" beurteilt. Nach dem Tauchen ergab die visuelle Bemusterung die Note "ausreichend". Das Dispersionsverhalten wurde mit "befriedigend" beurteilt.

### Vergleichsbeispiel 5

100 cm³-Glasflaschen, die gemäß Beispiel 1 präpariert worden waren, wurden gemäß Beispiel 1 in eine wäßrige, 0 °d, Phosphorsäure einer Konzentration von 0,5 Gew.-% getaucht. Die Reinigungswirkung wurde mit "gut" beurteilt. Nach dem Tauchen ergab die visuelle Bemusterung die Note "gut". Das Dispersionsverhalten wurde mit "gut" beurteilt.

### Beispiel 3

Die gemäß Beispiel 1 präparierten Flaschen wurden einer bestimmten Anzahl von Tauchungen (30) unterworfen und der Reinigungseffekt danach visuell beurteilt. Nach diesem Verfahren wurde in einer Tauchapparatur mit 6 Tauchbädern eine Reinigungslösung bestehend aus
- 0,5 Gew.-%: Isethionsäure,
- 0,15 Gew.-%: eines ethoxylierten (9 E0) Fettalkohols (C₁₀₋₁₈) als Entfettungskomponente und
- 0,1 Gew.-%: eines Polyethylenglykolethers (Alkylrest mit 8 bis 18 C-Atomen, 9 E0-Gruppen mit endständigem Butlyverschluß) als Antischaumkomponente
- Rest: Wasser

verwendet. Nach 30 Tauchungen zeigte die Isethionsäure-haltige Lösung einen einwandfreien Reinigungseffekt.

### Vergleichsbeispiel 6

Anstelle der in Beispiel 3 verwendeten Lösung wurde eine entsprechende, 0,5 Gew.-% Schwefelsäure enthaltende Lösung für die Tauchversuche verwendet. Nach 30 Tauchungen zeigte die Schwefelsäure enthaltende Lösung praktisch keinen Reinigungseffekt.

### Beispiel 4

In einem Milcherhitzerkreislauf, bestehend aus Milch- und Rahmerhitzer, Zentrifuge, Milchtank und Rohrleitungssystem, wurde nach vorheriger alkalischer Reinigung die saure Phase, die bisher mit einem salpetersäurehaltigen Produkt in 2 Gew.-%iger Konzentration bei 80°C durchgeführt wurde, mit einer 1 Gew.-%igen sauren Lösung, bestehend aus Isethionsäure, gefahren. Der Reinigungseffekt (Beseitigung von Milchstein) war einwandfrei; es konnte auch nach längerer Zeit keine Korrosion auf den Chromnickelstahlplatten (4301) und an dem Dichtungsmaterial festgestellt werden.

### Beispiel 5

In Gärtanks wurde bisher bei 6°C und etwa 1 Stunde mit einem Produkt auf Phosphorsäurebasis in Kombination mit einem Ethoxylierungsprodukt einer C₁₂-C₁₄-Fettsäure sowie Antischaummittel mit zufriedenstellenden Ergebnissen gearbeitet. Die Reinigung der Behälter erfolgte über einen Spritzkopf von einem Ansatzbehälter aus, der für das Reinigungs- und/oder Desinfektionsmittel vorgesehen war. Anstelle des phosphorsauren Produkts wurde ein Gemisch, bestehend aus Isethionsäure sowie den gleichen Ethoxylierungs- und Antischaummittel-Zusätzen, jeweils in gleichen Konzentrationen, verwendet. Das Reinigungsergebnis war deutlich besser als bei dem oben beschriebenen Verfahren. Die Zeit konnte hier auf 45 Minuten reduziert werden.

## Patentansprüche

1. Verwendung von Isethionsäure als Säuregrundlage von sauren Reinigungs- und/oder Desinfektionsmitteln.

2. Verwendung nach Anspruch 1, dadurch gekennzeichnet, daß das Reinigungs- und/oder Desinfektionsmittel 0,5 bis 100 Gew.-% Isethionsäure, bezogen auf die gesamte Formulierung, enthält.

3. Verwendung nach Anspruch 1, dadurch gekennzeichnet, daß das Reinigungs- und/oder Desinfektionsmittel 5 bis 95 Gew.-% Isethionsäure, bezogen auf die gesamte Formulierung, enthält.

4. Verwendung nach Ansprüchen 1 bis 3, dadurch gekennzeichnet, daß das Reinigungs- und/oder Desinfektionsmittel neben Isethionsäure weitere anorganische und/oder organische Säuren enthält.

5. Verwendung nach Anspruch 4, dadurch gekennzeichnet, daß das Reinigungs- und/oder Desinfektionsmittel 30 bis 40 Gew.-% Schwefelsäure und/oder 20 bis 30 Gew.-% Phosphorsäure, bezogen auf die gesamte Formulierung, enthält.

6. Verwendung von Reinigungs- und/oder Desinfektionsmitteln nach Ansprüchen 1 bis 5 in der lebensmittelverarbeitenden Industrie.

7. Verwendung nach Anspruch 6 zur Entfernung von Kohlenhydraten, Eiweiß, Fetten, anorganischen Mineralbestandteilen und sonstigen Resten, insbesondere von harten Oberflächen.

## Claims

1. The use of isethionic acid as the acid base of acidic cleaning and/or disinfecting formulations.

2. The use claimed in claim 1, characterized in that the cleaning and/or disinfecting formulation contains 0.5 to 100% by weight of isethionic acid, based on the formulation as a whole.

3. The use claimed in claim 1, characterized in that the cleaning and/or disinfecting formulation contains 5 to 95% by weight of isethionic acid, based on the formulation as a whole.

4. The use claimed in claims 1 to 3, characterized in that the cleaning and/or disinfecting formulation contains other inorganic and/or organic acids besides isethionic acid.

5. The use claimed in claim 4, characterized in that the cleaning and/or disinfecting formulat:ion contains 30 to 40% by weight of sulfuric acid and/or 20 to 30% by weight of phosphoric acid, based on the formulation as a whole.

6. The use of cleaning and/or disinfecting formulations as claimed in claims 1 to 5 in the food-processing industry.

7. The use claimed in claim 6 for removing carbohydrates, protein, fats, inorganic mineral constituents and other residues, more particularly from hard surfaces.

## Revendications

1. Utilisation d'acide iséthionique comme constituant acide de nettoyants et/ou désinfectants acides.

2. Utilisation selon la revendication 1, caractérisée en ce que le nettoyant et/ou désinfectant contient 0,5 à 100 % en poids d'acide iséthionique, par rapport à la totalité de la formulation.

3. Utilisation selon la revendication 1, caractérisée en ce que le nettoyant et/ou le désinfectant contient 5 à 95 % en poids d'acide iséthionique, par rapport à la totalité de la formulation.

4. Utilisation selon les revendications 1 à 3, caractérisée en ce que le nettoyant et/ou le désinfectant, outre l'acide iséthionique, contient d'autres acides minéraux et/ou organiques.

5. Utilisation selon la revendication 4, caractérisée en ce que le nettoyant et/ou le désinfectant contient 30 à 40 % en poids d'acide sulfurique et/ou 20 à 30 % en poids d'acide phosphorique, par rapport à la totalité de la formulation.

6. Utilisation de nettoyants et/ou de désinfectants selon les revendications 1 à 5 dans l'industrie alimentaire.

7. Utilisation selon la revendication 6 pour éliminer les hydrates de carbone, l'albumine, les graisses, les composants minéraux et autres restes, notamment sur les surfaces dures.
